# EUROPEAN PATENT SPECIFICATION

(11) **EP 2 895 015 B1**
(45) Date of publication and mention of the grant of the patent: **10.04.2019**
(21) Application number: 13767146.7
(22) Date of filing: 11.09.2013
(51) Int. Cl.: A23L 3/26, C02F 1/48, A61L 2/03, C02F 1/46, C02F 1/461

(54) **DEVICE AND METHOD FOR PROVIDING A HIGH VOLTAGE PULSED ELECTRIC FIELD TO A FLUID**
VORRICHTUNG UND VERFAHREN ZUR BEREITSTELLUNG EINES GEPULSTEN ELEKTRISCHEN HOCHSPANNUNGSFELDES FÜR EINE FLÜSSIGKEIT
DISPOSITIF ET PROCÉDÉ POUR LA FOURNITURE DE CHAMP ÉLECTRIQUE PULSÉ HAUTE TENSION À UN FLUIDE

(30) Priority: 11.09.2012 NL 2009443
(43) Date of publication of application: 22.07.2015
(73) Proprietor: Top B.V., 6708 PW Wageningen (NL)
(72) Inventor: VAN DEN BOSCH, Henricus Franciscus Maria, NL-6708 PW Wageningen (NL); SCHUTEN, Henricus Johannes, NL-6708 PW Wageningen (NL); VAN SCHEPDAEL, Ludo, NL-6708 PW Wageningen (NL)
(74) Representative: Ellens, Andries
(86) International application number: PCT/NL2013/050655
(87) International publication number: WO 2014/042526

(56) References cited:
- EP-A1- 2 052 743
- WO-A1-00/00044
- CN-U- 201 830 844
- US-A- 4 695 472
- US-A- 5 690 978
- US-A- 6 110 423
- US-A1- 2002 155 611
- US-A1- 2002 170 439
- US-A1- 2004 238 348

## Description

### Field of the invention

The invention relates to a device for applying a pulsed high voltage electric field (PEF) treatment to a fluid flow, especially a flow of a liquid food product. The invention also relates to a method for a pulsed high voltage electric field (PEF) treatment of such fluid flow, especially with such device.

### Background of the invention

US5,690,978 describes a pulsed electric field treatment device for the sterilization and preservation of pumpable food products having at least two electrodes and an insulator and particularly suited for the inactivation of vegetative and bacterial spore microorganisms. Each electrode includes an electrode flow chamber for making electrical contact with the pumpable food product and for allowing the pumpable food product to flow through the treatment device. The insulator is situated between the electrodes and includes an insulator flow chamber positioned between the electrode flow chambers and provides for the flow of pumpable food product from one electrode flow chamber to the other. A high voltage pulse generator applies a high voltage signal of variable voltage, frequency and pulse duration to the electrodes. The electrode and insulator flow chambers may employ a variety of sectional and cross-sectional geometries including tubular, cylindrical, rectangular, elliptical and non-uniform design.

WO2011/092247 describes a device comprising an electrode array, wherein a first and a second electrode surface are disposed in spaced axial wall sections of a treatment space, or in axially spaced sections along the treatment space, which forms the flow path of a pumpable medium, and an isolator is disposed between the electrodes. The flow channel through which the pumpable medium flows has a substantially annular cross-section, which in the outer and/or inner radii is sectionally delimited by the radially spaced electrode surfaces and isolator, which is disposed in the region which is located parallel to the longitudinal axis and around which the electrode surfaces are axially spaced.

CN201830844 describes a high intensity pulsed electric field sterilization processing chamber for online monitoring electric-field strength and temperature. Two coaxial type processing cavities are formed by two tubular high voltage electrodes and a tubular grounding electrode, the two tubular high voltage electrodes are separated by an insulation tube, and the two ends of the tubular grounding electrode are respectively sheathed with an insulation protecting jacket, so a coaxial type continuous type high intensity pulsed electric field processing chamber is formed. The processing chamber is internally provided with Hall elements and one-line type digital thermal sensors, signals are sent into a single chip after being conditioned, amplified and A/D converted, and each parameter is displayed by a liquid crystal display module. By the high intensity pulsed electric field sterilization processing chamber for online monitoring electric-field strength and temperature provided by the utility model, not only can the uniformity of electric-field distribution be ensured, but also the flow characteristic of liquid materials and the processing flow rate are improved, the occurrence of 'dead zone' is avoided, the process effect is - according to CN201830844 - remarkably improved, the online real-time quantitative monitoring of electric-field strength and temperature values in the processing chamber is realized, and data support is provided for a simulation model of a processing system.

US4695472 describes methods and apparatus for preserving fluid food products by subjecting the fluid foodstuffs such as dairy products, fruit juices and fluid egg products to controlled, pulsed, high voltage electric field treatment. The methods and apparatus further contemplate the utilization of treatment for storage temperature control in the preservation of perishable fluid foodstuffs.

US2002155611 describes a method for treating an aqueous flow colonized by cells with a pulsed electric field applied to a flow, characterized in that the applied field is substantially parallel to the direction of flow and to its application to the transfer of nucleic acids (RNA, DNA, oligonucleotides) into cells, to the transfer of proteins to cells, to the extraction of cytoplasmic macromolecules and molecules contained in the cells, to cell fusion and the production of hybrids and/or to insertion of membrane proteins. US2002155611 also concerns an electro pulsing chamber, a method for destroying cells and a membrane permeabilization method.

EP2052743 describes a device for sterilisation of beverages by means of an electrical field, i.e. PEF inactivation. The beverage is led through a nonconductive fluid path where at least two sets of electrodes are provided in particular configurations along the path to form capacitors with specific capacitances. One feature involves electrodes which contain perpendicular parts. Additionally the device comprises a pair of trigger points and an electrical activation circuit for short-circuiting said pair of trigger points and for causing an electric field to propagate from said first trigger point and along said fluid path.

WO0000044 describes a deactivation approach for deactivating microorganisms in a high-strength-electric field treatment system, can be characterized as an apparatus for reducing microorganism levels in products. The apparatus has an inlet tube of substantially uniform cross-sectional area extending from a distance before a treatment zone to at least into the treatment zone, the treatment zone is located between electrodes; a substantially ogival electrode nose positioned in the treatment zone; an outer electrode forming an interior of the inlet tube in the treatment zone. The treatment system can be employed in a method having steps of flowing the product through an inlet tube of substantially uniform cross-sectional area extending from a distance before a treatment zone to at least into the treatment zone; flowing the product between a substantially ogival electrode nose position in the treatment zone, and an outer electrode forming an interior of the inlet tube in the treatment zone; and applying at least one high strength electric field pulse to the product during transit through the treatment zone.

US6030538 describes a pulsed electric-field system, apparatus and method for the effective disinfecting and dewatering previously-dewatered, biologically active waste-water sludges (e.g., municipal waste-water sewage sludge) in an efficient manner, so as to dramatically reduce the resulting volume of the inert waste material which has to be disposed of by the municipality. The method employed sequentially consists of hydraulically pressurizing the previously dewatered sludge, pre-heating the previously dewatered sludge to a predetermined temperature range, exposing the previously dewatered sludge to a high energy pulsing electrical discharges, pressure separation of the resulting solids and liquid fraction, and final pressure extrusion of the separated solids through nozzles.

US20040238348 describes a device for treating a substance containing at least one undesirable organism by applying an axial, pulsed, high-voltage electrical field to substance flowing in a treatment zone comprising an insulating rounded cone, which facilitates smooth flow of the substance by minimizing pressure losses inside the flow zone of this substance.

### Summary of the invention

A disadvantage of prior art is that it was found that there is little control of the effect of the operation of the device. In particular, the control was insufficient when high killing rates (or low bacterial counts) were targeted. Further, it was found that prior art devices led in some instance to beverages with substantially reduced beverage characteristics, like e.g. fresh perception in the case of fruit juices.

Hence, it is an aspect of the invention to provide an alternative device, which preferably further at least partly obviates one or more of above-described drawbacks.

The invention (thus) provides a device as defined in claim 1 for applying a pulsed high voltage electric field (PEF) treatment to a fluid flow, said device comprising a chamber comprising an inlet with an inlet cross sectional area, an outlet, a treatment zone, and at least a first and a second electrode positioned for providing an axial electric field in said treatment zone, wherein especially the cross sectional area of the treatment zone is at least as large as the cross sectional area of the inlet, as further defined in the accompanying claims.

In a specific aspect, the invention provides a device for applying a pulsed high voltage electric field (PEF) treatment to a fluid flow of a liquid food product, said device comprising a chamber comprising an inlet with an inlet cross sectional area (A1), an outlet, a ring-shaped treatment zone arranged between the inlet and the outlet, a widening part between said inlet and said treatment zone, a flow body in said chamber providing in said chamber the ring-shaped treatment zone, and at least a first electrode (V1) and a second electrode (V2) positioned for providing an axial electric field in said treatment zone, wherein especially a cross sectional area of the treatment zone is at least as large as the cross sectional area (A1) of the inlet, as further defined in the accompanying claims.

The device may especially be used in a pasteurization or sterilization (treatment) of a fluid food product. The device can be operated continuously (on a continuous flow of the fluid).

It was found that providing the features of the device of the invention allows a better statistical control of effectiveness of the device. The ratio of the invention makes it possible to provide the fluid that needs to be treated in a laminar flow in the treatment zone. Herein, the term fluid especially refers to a liquid food product (see also below).

In this application, the feature 'cross sectional area' is used. In that respect, the cross sectional area can also be indicated as the flow-through cross-sectional area. This cross sectional area can be rectangular, elliptic, or round (such as a ring), for instance.

In an embodiment, said treatment zone is ring-shaped, in particular circle-ring shaped. It was found that this allows constructional advantages and good control over the fluid flow when said device is in operation. Such a cross sections area can for instance result from concentric tubes, where the treatment zone is defined by the inner wall of the outer tube and the outer wall of the inner tube. Such arrangement may provide a treatment zone between two (substantially) parallel plates.

Said chamber has a ring-shaped region upstream (herein also indicated as "ring-shaped upstream region" or "upstream ring-shaped region") of, and connecting to, said treatment zone. In particular, the ring-shaped region connects to the treatment zone. To that end, is has a substantially similar cross-sectional shape. In particular, the upstream ring-shaped region has a circle-ring-shaped cross sectional flow-through passage.

In the device, 'axial' can be defined as a line connecting the inlet and the outlet. In case of a ring-shaped treatment zone, the axial direction can be defined as a line parallel to the rotational axis of a circle-ring-shaped treatment zone. It can furthermore be defined in that the axial direction is parallel to the flow direction of fluid flowing through the device from the inlet to the outlet of the device in use. Thus the axial direction is clear to a skilled person. In use, the electrical field is substantially parallel to the flow of fluid.

Said upstream ring-shaped region has an axial length (L1) of at least five times a treatment zone height (H). In particular, said upstream ring-shaped region has an axial length (L1) of at least ten times a treatment zone height (H). In this respect, the treatment zone height in general can be defined as a distance between opposite bounding walls which have the smallest mutual distance. The treatment zone may have a rectangular cross section. In case of the embodiment with a circle-ring-shaped cross section, the treatment zone height (H) is the distance between concentric bounding walls.

In an embodiment, said upstream ring-shaped region has a cross sectional area (A3 minus A4) substantially equal to the cross sectional area of said treatment zone.

Said chamber has a ring-shaped region downstream of, and connecting to, said treatment zone. This ring-shaped region is herein also indicated as downstream ring-shaped region. Said downstream ring-shaped region (herein also indicated as "ring-shaped downstream region") has an axial length (L2) of at least two times a treatment zone height (H). In particular, said downstream ring-shaped region has an axial length (L2) of at least five times a treatment zone height (H). In an embodiment, said downstream ring-shaped region has a cross sectional area substantially equal to the cross sectional area of said treatment zone. In an embodiment, a ratio of said cross sectional area of said treatment zone to the cross sectional area of said inlet is selected to reduce a flow speed of incoming fluid to a laminar flow speed region in an operational flow speed region of said device. Said cross sectional area of said treatment zone is at least 1.5 times the cross sectional area of said inlet. More in particular, said cross sectional area of said treatment zone is at least three times the cross sectional area of said inlet. Each more specific embodiment was found to provide a more constant fluid flow. In an embodiment, the length (L) of the treatment zone is between 2 and 5 times a height (H) of the treatment zone. In this respect, the length of the treatment zone is defined as a zone between the inlet and the outlet where a substantially homogeneous alternating electrical field is present. In an embodiment, the treatment zone length is defined by the distance (in axial direction) between the first and second electrode. In an embodiment, the length of the treatment zone is defined by the length (defined in flow direction) of an electrically isolating part that separates the first electrode and the second electrode. Especially with one or more of such conditions, such as one or more of the herein indicated ratio, treated products may be obtained with better characteristics than with apparatus according to the prior art.

In an embodiment, said chamber comprises a widening part, in particular a cone-shaped widening part, between said inlet and said treatment zone. In particular, said widening part is situated between said inlet and said ring-shaped region when present. Said widening part gradually widens in cross sectional area from said inlet in downstream direction. In particular a cross sectional area widens up to between 1.5 and 10 times the cross sectional area of the inlet. In particular, it widens between 2 and 10 times the cross sectional area of the inlet.

The device comprises a flow body in said chamber, providing in said chamber the ring-shaped treatment zone that is defined by the inner surface of the chamber and the outer surface of the flow body. Said flow body at its upstream end is provided with a tip.

In an embodiment, said cross sectional area of said inlet in a downstream direction gradually flares out until the cross sectional area is at least 5 times larger with respect to said inlet cross sectional area, subsequently said chamber comprises said flow body which continues said cross section into a ring-shape with a smooth and gradual reduction of the cross sectional area subsequently with at least 1.5 times and up to a ring-shaped treatment zone. Said cross sectional area of said ring-shaped region is substantially constant over an axial length that is equal to at least 5 times the height (H) of the treatment zone before said treatment zone. In an embodiment, said cross sectional area is substantially constant over an axial length which is at least 2 times the height (H) of the treatment zone after said treatment zone. Especially with one or more of such conditions, such as one or more of the herein indicated ratio, treated products may be obtained with better characteristics than with apparatus according to the prior art.

In an embodiment, the device further comprises a fluid displacement unit, such as a pump, arranged for displacing a fluid through said treatment chamber and provided with a setting to provide a rate of flow with a laminar flow at said treatment zone. The term "fluid displacement unit" may also relate to a plurality of fluid displacement units. The fluid may thus be guided through the device by the fluid displacement unit. The fluid displacement unit generates the flow of the fluid (through the device).

In an embodiment, said second electrode is positioned downstream of said first electrode for providing said axial, pulsed electric field with field lines substantially parallel to a flow direction (F) of fluid in said treatment zone when said device is in operation, in particular said first electrode is positioned upstream of said treatment zone and said second electrode is positioned downstream of said treatment zone. In an embodiment, said treatment zone comprises said first electrode comprising a pair of concentric electrodes. In another or further embodiment, said second electrode comprises a pair of concentric electrodes. In the embodiment of the ring-shaped treatment zone, the pairs of concentric electrodes are also ring-shaped and provided adjacent to the treatment zone. The setting may provide a homogeneous electric field.

In an embodiment, the device comprises at least one replaceable electrode part upstream of said treatment zone, and a second replaceable electrode part downstream of said treatment zone. In particular, the replaceable electrode parts are adjacent to the treatment zone. In an embodiment, said treatment zone is circle-ring-shaped and said first electrode comprises a pair of concentric electrodes and said second electrode comprises a pair of concentric electrodes, wherein at least part of said electrodes are formed by replaceable concentric rings adjacent to said treatment zone. It was found, in use, that in particular the surface of the electrodes closest to the treatment zone could degrade. In particular when the device is used in treatment of for instance food products, thus when the surface of that part erodes, that part of the device can be replaced easily.

In a simple and efficient design, the chamber of the device as well as the flow body have a circular transverse cross section. In this embodiment, the flow body and the chamber are concentric. In this way, a circle-ring-shaped treatment zone is easily provided. In this design, the chamber comprises two transverse chamber halves. Between these chamber halves, a ring made from an electrically isolating material is fitted, in order to provide the treatment zone. In such an embodiment, the flow body can also comprise two transverse parts, such as two transverse halves with a ring from an electrically isolating material fitted between these parts or halves, respectively. Both rings forming the electrically isolating material are concentric, and provide bounding walls of the treatment zone. The replaceable rings that form at least part of the electrodes can be two sets of concentric rings fitted between the parts, such as halves, of the chamber and the parts, such as halves, of the flow body on one side and the electrically isolating, concentric rings forming the treatment zone walls on the other side.

Especially good results may be obtained in embodiments of the device, wherein said chamber has a ring-shaped region (or "upstream ring-shaped region") upstream of, and connecting to, said treatment zone, wherein said upstream ring-shaped region has an axial length (L1) of at least five times a treatment zone height (H), in particular said upstream ring-shaped region has an axial length (L1) of at least ten times a treatment zone height (H), wherein said upstream ring-shaped region has a cross sectional area (A3 minus A4) between 0.9 and 2.0 times to the cross sectional area of said treatment zone, and wherein said treatment zone is circle-ring shaped, wherein the length (L) of the treatment zone is between 2 and 5 times a height (H) of the treatment zone, and wherein said chamber has further a downstream ring-shaped region downstream of, and connecting to, said treatment zone, wherein said downstream ring-shaped region has an axial length (L2) of at least two times a treatment zone height (H), in particular said downstream ring-shaped region has an axial length (L2) of at least five times a treatment zone height (H), wherein said downstream ring-shaped region has a cross sectional area between 0.9 and 2.0 times the cross sectional area of said treatment zone, wherein said cross sectional area of said ring-shaped region upstream of said treatment zone is substantially constant over an axial length of especially at least 5 times the height (H) of the treatment zone, and wherein said cross sectional area of said downstream ring-shaped region downstream of treatment zone is substantially constant over an axial length of especially at least 2 times the height (H) of the treatment zone.

The upstream ring-shaped region and the downstream ring-shaped region may each independently be regions between two substantially parallel plates, like an (elongated) ring shaped region, i.e. each independently with a constant height. Further, also the treatment zone may especially be a region or zone between two substantially parallel plates, i.e. with a constant height (H). Hence, especially each independently the upstream ring-shaped region and the downstream ring-shaped region and the treatment zone may have constant heights (or widths) (over their respective entire lengths). Optionally, the upstream ring-shaped region may include some tapering, such as 15° or less, such as 10° or less, even more especially, as 5° or less, especially with a decreasing height in a direction from the inlet to the treatment zone. Especially, as indicated above, the upstream ring-shaped region has a constant height (over its entire length). Even more especially, the height of the upstream ring-shaped region (over its entire length L1) is substantially the same as the height of the treatment zone, such as in the range of 0.9H - 1.1H, especially 0.95H - 1.05H, especially the height of the upstream ring-shaped region (over its entire length) is identical to the height of the treatment zone (over its entire length). Likewise, the height of the downstream ring-shaped region (over its entire length L2) is substantially the same as the height of the treatment zone, such as in the range of 0.9H - 1.1H, especially 0.95H - 1.05H, especially the height of the downstream ring-shaped region (over its entire length) is identical to the height of the treatment zone (over its entire length).

Further, especially good results may be obtained in embodiments of the device, wherein a ratio of said cross sectional area of said treatment zone to the cross sectional area (A1) of said inlet is selected to reduce a flow speed of incoming fluid to a laminar flow speed region in an operational flow speed region of said device, in particular said cross sectional area of said treatment zone is at least 1.5 times the cross sectional area (A1) of said inlet, more in particular said cross sectional area of said treatment zone is at least three times the cross sectional area (A1) of said inlet.

Especially good results may also be obtained in embodiments of the device, wherein said chamber comprises said widening part, in particular a cone-shaped widening part, between said inlet and said treatment zone, in particular between said inlet and said ring-shaped region when present, wherein said widening part gradually widens in cross sectional area from said inlet (A1) in downstream direction, in particular a cross sectional area widens up to between 1.5 and 10 times the cross sectional area of the inlet (A1), in particular between 2 and 10 times the cross sectional area of the inlet (A1), the device further comprising said flow body in said chamber, providing in said chamber the ring-shaped treatment zone that is defined by the inner surface of the chamber and the outer surface of the flow body, wherein said flow body at its upstream end is provided with a tip.

Yet, especially good results may be obtained in embodiments of the device, wherein said cross sectional area of said inlet (A1) in a downstream direction gradually flares out until the cross sectional area is especially at least 5 times larger with respect to said inlet cross sectional area (A1), further downstream said chamber comprises said flow body which continues said cross section into a ring-shape with a smooth and gradual reduction of the cross sectional area in further downstream direction with especially at least 1.5 times and up to a ring-shaped treatment zone.

In yet a further embodiment, the axial length (L1) of the upstream ring-shaped region, the axial length (L3) of the (entire) upstream region that starts with the tip (especially up to its (upstream) extremity or tip of the cone shaped tip) from the flow body up to te treatment zone, and the axial length (L4) of the widening part may each independently especially be at least 2*L, especially at least 4*L, such as at least 8*L. The axial length (L5) of the widening part up to the tip, especially up to its (upstream) extremity or tip of the cone shaped tip may in general be < L1 and/or <L3. This axial length of the flow body may especially be in the range of 30-95% of the total axial length between the inlet 2 and the outlet 3, such as at least 50%.

Further, with the same apparatus better results in terms of reduction in bacterial count end/or taste can be obtained when the Reynolds number (of the flowing fluid) is equal to or below 3000, especially equal to or below 2300, such as below 2000. The presently proposed device surprisingly appears to greatly facilitate providing a laminar flow. Without the widening part and the condition that a cross sectional area of the treatment zone is at least as large as the cross sectional area of the inlet it appears that creation of a laminar flow is much more difficult. Further, it also appears that the axial electric field in combination with the laminar flow may provide better results in terms of bacterial reduction and/or taste conservation. Surprisingly, the freshness perception of juices treated with the present device and/or present method is in general higher than with prior art devices or with geometries of the device not according to the presently claimed conditions (e.g. tube system without flow body with turbulent uniform plug flow). It further appears that it is advantageous in terms of bacterial reduction and/or taste conservation that said upstream ring-shaped region has an axial length of at least five times a treatment zone height, or even more. It (thus) also appears that the flow body has positive effects on the outcome of the process. Without such flow body, freshness perception of the treated juice seems to be lower. Likewise, when increasing the flow speed and pulse frequency, one may suppose that the effectiveness of the method is the same. However, it appears that worse results may be obtained. Without wishing to be bound to any theory, the laminar flow seems advantageous.

Note that a uniform flow may not be a laminar flow. In contrast, a uniform flow may in the prior art indicate a turbulent flow. Hence, even what is called in the art to be a plug flow can be turbulent.

It also appears that the temperature range of the liquid food product in general has to be in the range of 30-65 °C, especially 35-60 °C, even more especially 40-55 °C. Outside these ranges the properties of the product, in terms of bacterial reduction and/or taste conservation, is inferior to temperatures of the liquid food product within the temperature range as herein indicated.

Hence, in a further aspect the invention provides a method for treating a liquid food product, wherein said liquid food product is guided through a device for applying a pulsed high voltage electric field (PEF) treatment to a fluid flow, said device comprising a chamber comprising an inlet with an inlet cross sectional area (A1), an outlet, a ring-shaped treatment zone arranged between the inlet and the outlet, especially a widening part between said inlet and said treatment zone, especially a flow body in said chamber providing in said chamber the ring-shaped treatment zone, and at least a first electrode (V1) and a second electrode (V2) positioned for providing an axial electric field in said treatment zone, wherein a cross sectional area of the treatment zone is especially at least as large as the cross sectional area (A1) of the inlet, the method further comprising providing the liquid food product, especially in a laminar flow, in the (ring-shaped) treatment zone, and applying a pulsed electric field between said first electrode and second electrode, wherein a potential difference is applied to said electrodes to result in an electrical field of especially 20-60 kV/cm in said treatment zone, as further defined in the accompanying claims. As indicated above, especially good results may be obtained when the method further comprises providing said liquid food product with a temperature selected from the range of 35-55 °C, even more especially 40-55 °C, such as 40-50 °C, in said treatment zone. The invention further pertains to a method for treating a liquid, in particular a liquid food product, wherein said liquid is guided through a PEF device, especially the device described above, and wherein the flow speed of the liquid to be treated is selected with respect the liquid properties and to the cross sectional area of the treatment zone to result in laminar flow. Especially good results were obtained with temperatures (at the inlet of the treatment zone) of the liquid food product above 35 °C and with electrical fields of at least 25 kV/cm, even more especially with temperatures above 40 °C and with electrical fields of at least 35 kV/cm. Within the treatment zone, the temperature of the liquid food product may rise, due to the treatment (see also below).

In an embodiment, a pulse length, and pulse frequency of the electric field are set with respect to the flow speed of the fluid that each fluid volume receives between 1 and 8 pulses, such as between 1 and 6 pulses, like between 1 and 2 pulses, in particular 1.05-1.2 pulses. Good results may however also be obtained with at least 1.5 pulse.

In an embodiment of said method, said device is further provided with a pulsed electric field generator for applying a pulsed (high) electric field between said first and second electrodes, wherein a potential difference is applied to said electrodes to result in an electrical field of 20-60 kV/cm in said treatment zone. In an embodiment, a potential difference is applied to said electrodes with a pulse frequency of less than 100 Hz, and with a pulse width of 1-5 microseconds. Especially, such pulsed electric field generator is able to provide variable potential differences (to the electrodes, to provide also variable electrical fields) and/or able to provide pulses with variable pulse width and/or able to provide pulses with different pulse frequencies. By controlling the pulsed electric field, the treatment conditions may be controlled and flow speed and electrical field may be optimized with respect to each other (see also below).

In an embodiment, the device described above is used in a method described above for treating food products. In particular, the device is used for lowering the bacterial count (CFU/ml) by a factor 1.000 or higher. In fact, this can be achieved without deterioration of the quality, like smell or taste, of the food products. Hence, in a further aspect the invention also provides the use of the method as described herein and/or the device as described herein for pasteurizing or sterilizing a liquid food product, especially for lowering the bacterial count (CFU/ml) by a factor 1000 or higher in said liquid food product. The liquid food product as described herein especially comprises (or consists of) a juice, such as a fruit juice. Other liquids that may be treated are vegetable juices. Examples of characteristic juices that may be treated are orange juice, grapefruit juice, grape juice, melon juice, strawberry juice, blackberry juice, tomato juice, etc. etc. However, also other beverages may be treated with the device and/or method as described herein. Other examples of the liquid food product may e.g. include milk, whey, a smoothie, ice tea, ice coffee, beer, wine, etc. Especially, the liquid food product may include a fruit juice or a fruit nectar. Hence, examples of juices that can also be treated may include one or more of orange nectar, grapefruit nectar, grape nectar, melon nectar, strawberry nectar, blackberry nectar, etc. etc.

The terms "upstream" and "downstream" relate to an arrangement of items or features relative to the propagation of a fluid through the device. The fluid travels from the upstream end of the device, at the inlet, to the downstream end of the device, the outlet.

The term "substantially" herein, such as in "substantially parallel", "substantially equal" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. In fact, in many instances it may be used to cover embodiments that are functionally the same. The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species". The term "comprise" includes also embodiments wherein the term "comprises" means "consists of".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and/or by means of or by using a suitably programmed computer to control the device, and/or implementing the method in the device when in operation. In the device claims when enumerating several means, several of these means may be embodied by one and the same item of hardware. The mere fact that certain measures are recited in mutually different dependent claims does not indicate that a combination of these measures cannot be used to advantage.

The invention further applies to a device comprising one or more of the characterizing features described in the description and/or shown in the attached drawings. The invention further pertains to a method or process comprising one or more of the characterizing features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawings in which corresponding reference symbols indicate corresponding parts, and in which:
Figure 1 depicts a longitudinal, axial cross section of an embodiment of a device of applying a pulsed electric field;
Figure 2 shows a transverse cross section as indicated in figure 1;
Figure 3 shows a detail of the treatment chamber of the device of figure 1; and
Figures 4a-4b schematically show some aspects of flows.

The drawings are not necessarily on scale.

### Description of preferred embodiments

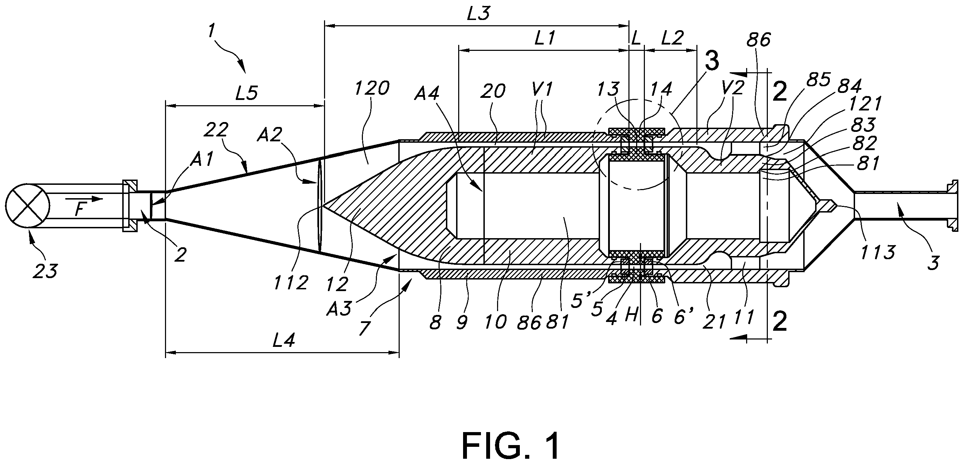

Figure 1 depicts an axial cross section of an embodiment of a device 1 for applying a pulsed electric field to a fluid. The device of figure 1 has an inlet 2 and an outlet 3. It further has a treatment zone 4 where a fluid is subjected to a pulsed electrical field while passing through that treatment zone 4. The treatment zone 4 is arranged between the inlet 2 and the outlet 3. Furthermore, a fluid flow direction F is indicated. In this embodiment, the inlet 2 and outlet 3 are in line. This provides the best option for a flow through the device that has as little as possible disturbance. In fact, in this way a flow through device is provided. A skilled person may find alternative positioning or dimensioning or both of the inlet and outlet that may provide the same result.

Device 1 comprises a chamber 7. In chamber 7, in this embodiment a flow body 8 is positioned. In this embodiment, the longitudinal axes of the chamber 7 and the flow body 8 fall together. This, again, is an embodiment that allows a fluid flow that is disturbed as little as possible. Reference 23 indicates a pump as embodiment of a displacement means.

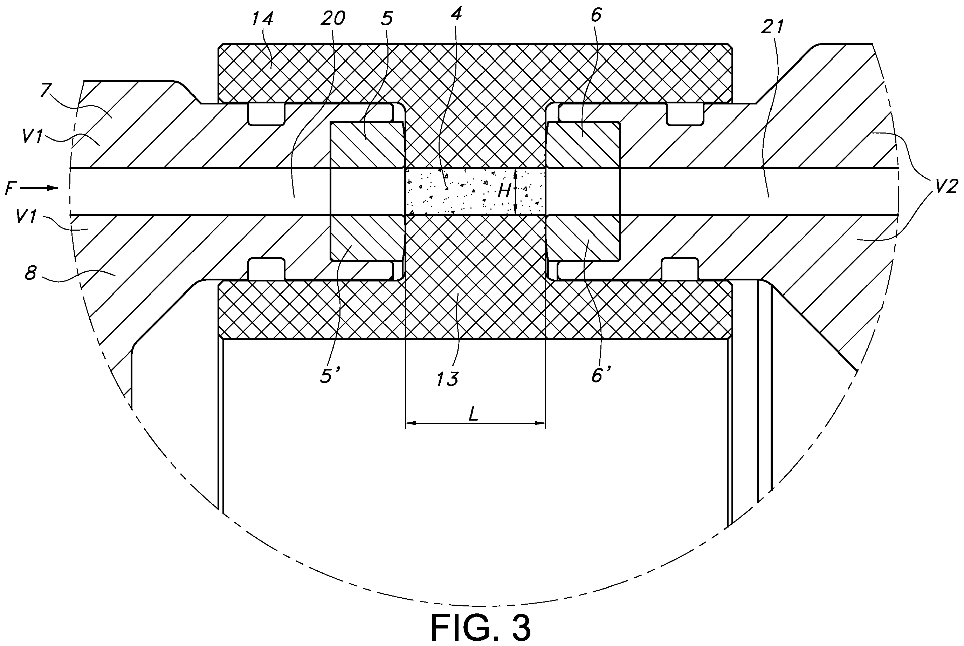

In the embodiment of the figures 1-3, both the chamber 7 and the flow body 8 have circular cross section. This was found to be the easiest way to provide a device in which the chamber 7 and the flow body 8 can be mutually aligned to provide the claimed features, and to provide a fluid flow that can be laminar. Again, skilled persons understands that small deviations can be made from "exactly round", "exactly aligned", that still are functionally equivalent to the shown embodiment. In this embodiment, in fact a ring shaped flow-through cross section is obtained by providing a concentric outer tube and inner tube, more specifically here, an inner tube and an outer tube having a circular cross section.

In this embodiment, the device 1 at the inlet 2 has a cross sectional area A1. In downstream direction, the cross sectional area increases. Continuing further downstream, the device 1 here has a decreasing cross sectional area. Continuing further downstream, the device 1 has a constant cross sectional area. In this embodiment, the cross sectional area of the outlet 3 is substantially equal to the cross sectional area A1 of the inlet 2. In this way, in operation, the flow speed of a liquid first slows down, then comes in a region where the flow enters a laminar flowing state with as little turbulence as possible, and then exits the device 1 at outlet 3.

Starting from inlet 2 and going in downstream direction (the flow direction is indicated with arrow F), chamber 7 first widens to a cross sectional area A2 at the location where the flow body 8 starts. After that, that cross sectional area of chamber 7 widens further up to a cross sectional area A3. In this embodiment, the widening part has the shape of a cone. In a particular embodiment, such a cone can have a top angle of between 15° - 45°. More in particular, the cone has a top angle of between 20°-35°.

After the position where the cross sectional area A3 is indicated in the drawing, the chamber 7 here has a circle cylindrical shaped chamber part 9. Here, the cross section and cross sectional area, which is the difference between cross sectional area A3 and cross sectional area A4, are constant when continuing in downstream direction. In at least part of the circle cylindrical chamber part 9, the flow body 8 in this embodiment also has a circle cylindrical part 10. The circle cylindrical part 10 has a cross sectional area A4. The flow body 8 is positioned in the chamber 9 using struts 11 located at a distance and downstream of the treatment zone 4 in order to avoid any disturbance of a fluid flow when the device 1 is in operation. At its upstream end, flow body 8 comprises a tip 12 that is shaped in such a way that it disturbs a fluid flow through chamber 7 as little as possible, causing in operation as little turbulence as possible, in particular at the treatment chamber 4. In an embodiment, the tip 12 is cone-shaped. Such a cone-shaped tip 12 can have a top angle of 30°-80°. In particular, the tip 12 can have a top angle of 40°-65°. The tip 12 and the cone-shaped part can in fact have any shape, as long as the cross sectional area of the inlet, A1, and the cross sectional area of the treatment zone fulfill the requirements of the claims. For instance, instead of a cone the cross sectional area can increase stepwise, over a long length and using several steps. Alternatively, a widened inlet channel, tubing or pipe may be used. A skilled person can think of other, similar embodiments that functionally have the same effect. It was found that the current embodiment is mechanically a simple way of providing a treatment zone according to the invention, but with a relatively small distance between opposite treatment zone walls bounding the treatment zone 4.

The device for applying a pulsed electric field to a fluid of the current type has a first electrode and a second electrode, electrically and spatially separated from one another. In this embodiment, the device 1 has a first electrode and a second electrode which are positioned in such a way that they result in an axial electric field in the treatment zone 4. In this embodiment, the first electrode is positioned upstream of the treatment zone, and the second electrode is positioned downstream of the treatment zone. In the embodiment shown, an axial electric field means the field lines run parallel to vector F which indicates the flow direction. In this embodiment, the inside of the outer chamber wall upstream of the treatment zone is placed at a voltage VI, and the inside of the outer chamber wall downstream of the treatment zone 4 is placed at a voltage V2. The same holds for the flow body 8: a part upstream of the treatment zone 4 is placed at the same voltage VI, and a part downstream of the treatment zone is placed at a voltage V2.

To separate the first and second electrodes physically, the treatment chamber 4 comprises an inner ring 13 and an outer ring 14. Both the inner ring 13 and the outer ring 14 are made from an electrically isolating material. Preferably, the isolating material is food compliant. For instance, the electrically isolating material is a polymer material. Suitable polymer materials are nylon, polyethylene (PE), polypropylene (PP), or Poly-Ether-Imide (PEI), etc.. The first and second electrodes in fact flank the isolating rings 13, 14 and thus width of the isolating rings 13, 14 here in fact define the length (L) of the treatment zone 4, as indicated in the drawings.

In this embodiment, chamber 7 comprises two chamber parts, such as two chamber halves. Here, the two chamber halves are electrically isolated from one another through isolating ring 14. In the embodiment, the two halves are transverse halves. They fit together at a transverse plane that has the longitudinal axis of the device as mathematical normal. The two halves of chamber 7 are in fact separated by the electrically isolating ring.

Furthermore, in this embodiment, the flow body 8 also comprises two flow body halves. The two flow body halves are electrically isolated from one another by the inner ring 13.

The device 1 has a first electrode upstream of the inner ring 13 and the outer ring 14. The second electrode is located downstream of the inner ring 13 and outer ring 14. In particular, in this embodiment, the inner surfaces of the chamber 7 and of flow body 8 are adapted to function as first and second electrodes. At least the surfaces of the flow body 8 and the inner surface of chamber 7 are conductive at least adjacent the electrically isolating inner ring 13 and outer ring 14. In fact, the first electrode has an inner first electrode, formed by the inner surface of the flow body 8 upstream of the inner ring 13. The first electrode further comprises an outer electrode formed by the inner surface of the chamber 7 upstream of outer ring 14.

The second, downstream electrode has in inner second electrode formed by the surface of the flow body 8 downstream of the inner ring 13, and an outer electrode formed by the surface of the chamber 7 downstream of the outer ring 14.

The inner first electrode and outer first electrode can be placed at the same voltage VI, while the inner second electrode and outer second electrode can be placed at the same voltage V2. In that way, an axial electric field can be created at the treatment zone.

It was found that the high electric field over the treatment chamber 4 may lead to degradation of the inner surface at the ends of the inner ring 13 and outer ring 14. Therefore, replaceable rings 5, 5' and 6, 6' are introduced. These rings, with inner rings 5', 6' and outer rings 5, 6 can be replaced easily. In this embodiment, the rings are conductive and conductively coupled to the first and second electrodes, respectively. Thus, the rings 5-6' in fact form a replaceable part of the first and second electrodes. In an alternative embodiment, these rings 5-6' are the first and second electrodes. In such an embodiment, the further inner surface of the chamber 7 and the further outer surface of the flow body 8 may be electrically isolating. The rings 5, 5' and rings 6, 6' may thus form respectively the first and second electrode. The first and second electrode thus comprise pairs of concentric electrodes.

In an embodiment, the dimensions of the device of figures 1-3 are as follows:
A1 = 100-2000 mm²;
A4 = 30-300 mm diameter;
H = 2-10 mm;
L= 2H-5H, in part 2.5H-3.5H, more in particular L = 5-35 mm length;
E = 20-60 kV/cm i.e., 10-210 kV is applied over the treatment zone (4);

The dynamic viscosity µ of the fluid to be treated usually is 0.5 - 10.000 mPa·s (measured via Brookfield).

In operation, a liquid, often a food product, is passed through the device 1. The flow speed and flow rate of the liquid and the dimensions of the device are selected to provide a laminar flow of the liquid through the treatment zone. In view of device dimensions in relation to liquid properties, this can be defined in terms of the Reynolds number Re = vLρ/µ, with v the mean velocity of the fluid, with L the characteristic length or hydraulic diameter, with ρ the fluid density, and µ the dynamic viscosity. For a flow to be laminar, it is often defined that the Re < 2300.

The pulse frequency that is applied in operation is selected in such a way that all the liquid receives at least one pulse during its passing through the treatment zone 4. In fact, in an embodiment, the pulse frequency is selected in such a way that all the liquid receives exactly one pulse/dose of electrical field. This prevents heating of the liquid as much as possible. The pulse width is also adjusted to provide a minimum duration of the electrical field for all the liquid. In particular in increasing storage life or shelf life of the liquid, like a food product, this is important. In particular when a defined level of killing of organisms is required, or a specific limit of bacterial count is to be attained, it is important that all the liquid receives a predefined "dose" of electrical field in view of level and duration, in order to attain a certain level of killing. In particular when low levels of remaining organisms (low bacterial count, for instance), for instance of bacteria, fungi, spores are defined, it was found that homogeneous treatment is even more important.

Referring to fig. 1, reference L3 indicates an axial length of the upstream region that starts with the tip from the flow body 8 up to the treatment zone. Especially, the axial length L3 is at least five times a treatment zone height (H). Further, especially L1 and L3 are each independently at least 2*L, especially at least 4*L, such as at least 8*L. Reference L4 refers to the axial length of the widening part 22. The axial length L4 of the widening part is especially at least 2*L, especially at least 4*L, such as at least 8*L. Reference L5 indicates the axial length of the widening part up to the tip 12, especially up to its (upstream) extremity or tip of the cone shaped tip. This extremity is indicated with reference 112. The axial length L5 of the widening part up to this tip may in general by < L1 and/or <L3.

Reference 120 indicates the entire upstream region from the inlet 2 to the treatment zone 4; reference 121 indicates the entire downstream region from the treatment zone 4 up to the outlet 3. As indicated above, reference 112 indicates the upstream extremity; reference 113 indicates the downstream extremity of the flow body 8. The axial length of the flow body between the upstream extremity 112 and downstream extremity. This axial length of the flow body may be in the range of 30-95% of the total axial length between the inlet 2 and the outlet 3, such as at least 50%. Reference 86 indicates the (outer) wall of the device 1.

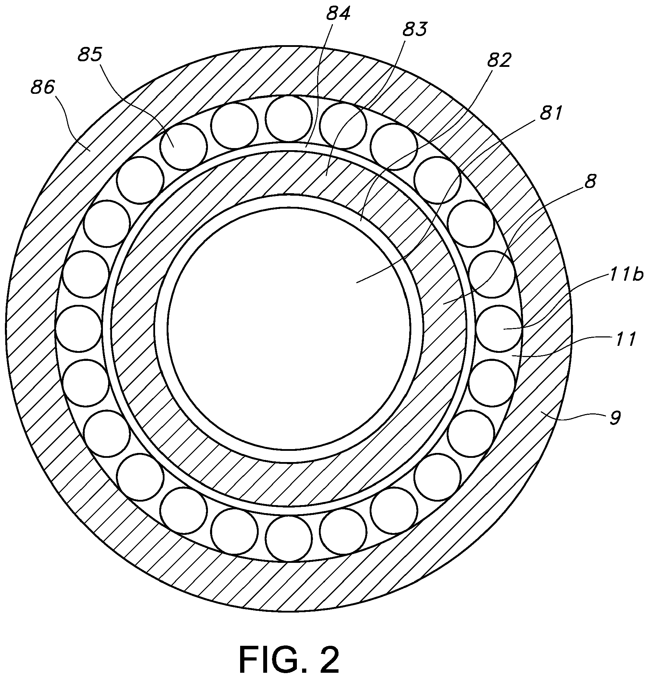

Referring to figs. 1 and 2, reference 81 indicates a (hollow) interior of the flow body 8. References 82, 83, 84, and 85 respectively indicate a part (82) with a diameter difference, as can also be seen in fig. 1, a (circumferential) wall of the flow body (83), a part (84) with a diameter difference, as can also be seen in fig. 1, the part 85 including a connection of the flow body with the surrounding, especially the outer wall 86, wherein here the connection includes struts 11, which are designed to form a plurality of channels 11b. Reference 86 indicates the wall of the device 1. Struts 11 may be arranged in such a way, that they provide channels 11b. The struts allow the arrangement of the flow body 8 in the device 1.

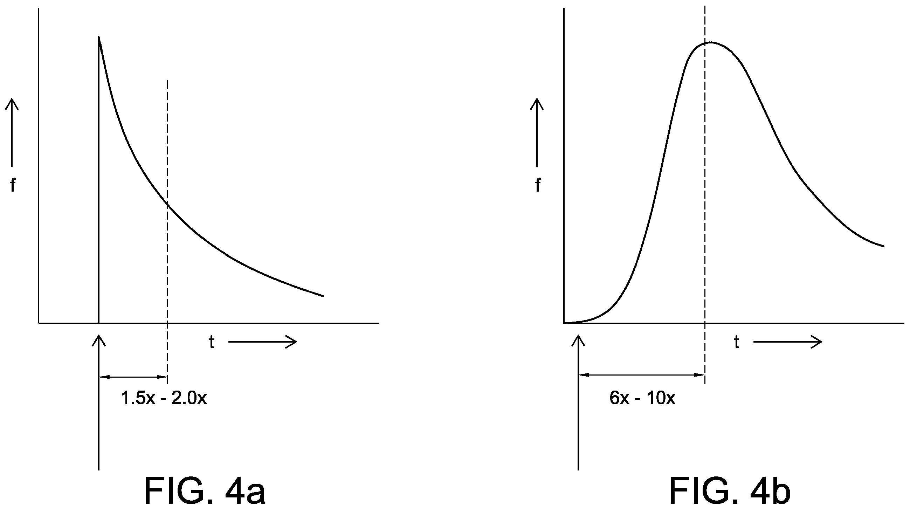

Figs. 4a-4b schematically depict frequency (f) (y-axis) vs. residence time (t) (x-axis) plots for a laminar flow and turbulent flow respectively. The dotted lines within the graphs indicate the mean or average residence times; the differences indicated below the graphs indicate the difference of the residence time of the fastest particles / fluid packages within the flow relative to the average flow speed. This difference is much smaller for a laminar flow than for a turbulent flow. Based on e.g. fig. 4a, in laminar flow systems, the frequency of the pulsed electric field can be set with respect to a flow speed of the fluid such that the fastest fluid fraction receives between especially 1 and 8 pulses.

### Examples

### Example 1: Test with orange juice

Orange juice was treated in order to lengthen its the shelf life. Orange juice was used that had a dynamic viscosity of 1 mPa·s (Brookfield dynamic viscosity). The orange juice was provided at an average flow speed of 0.16 m/s. A device of figures 1-3 was used, in which H was 5 mm. The cross sectional area of the treatment zone was 345 mm², the treatment zone length L was 15 mm, L1 was 200 mm, L2 was 54 mm. Operational settings of the device were as follows. The pulse generator was set to obtain an electric field of 30 kV/cm. The pulse frequency was set at 50 Hz, and the pulse duration was 2.5 microseconds. Inlet temperature was 40°C. In these conditions, the shelf life of the orange juice was extended from 7 days to 21 days.

The Reynolds number in this case was 1768, with v being 0,16 m/s, the hydraulic diameter being 0.01 m (here about two times the height of 5 mm, as two parallel plates form a ring shaped treatment zone), ρ being 1100 kg/m³, and µ being 0.001 Pa.s.

### Example 2: Apparatus

A plurality of devices were designed and built. Some of them are indicated below with the following parameters:

| | Diameter(s) (mm) at cross section: | | | | Length(s) (mm): | | | | | | |
|---|---|---|---|---|---|---|---|---|---|---|---|
| | A1 | A2 | A3 | A4 | L1 | L | L2 | L3 | L4 | L5 | H |
| 1 | 28 | 94 | 125 | 115 | 160 | 15 | 51 | 300 | 230 | 156 | 5 |
| 2 | 28 | 27 | 27 | 17 | 200 | 15 | 54 | 300 | 0 | 0 | 5 |

With the first apparatus preservation tests were done, with amongst others measurements of the quality of the liquid food product after 7, 14, 21 and 28 days after treatment (in comparison with untreated liquid food products). With the second apparatus orange juice tests (see above example) and yeast experiments were done (see also below).

### Example 3: Yeast experiments

Amongst others to evaluate the effect of laminar or turbulent flow, temperature, electric field strength, etc., on the inactivation of yeast, a number of experiments were performed. Water with added yeast cells was treated with the same parameters. The only difference was the flow (frequency adapted to flow). Flows in apparatus 2 of 100 1/h and 200 1/h have a laminar flow profile and flows of 300 1/h and 400 1/h have a turbulent flow profile. Apparatus 1 can create a laminar flow up to at least 1200 l/h. The treated samples were kept in small plastics bottles. Time until bulging of the bottles, due to CO₂ production, was measured. More hours until bulging means more inactivation of yeast cells, thus a longer shelf life. The test was performed in triplicate.

Examples 3a and 3b were performed at constant electrical field strength and starting temperature. The flow speed was varied.

### Example 3a: Experiment 1 (Y7) - effect of Reynolds number (laminar flow) (apparatus 2)

| | Sample 1 | Sample 2 | Sample3 | Average |
|---|---|---|---|---|
| | hours | hours | hours | hours |
| Untreated | - | 35 | 35 | 35 |
| Flow 100 l/h | 114 | 115 | 118 | 116 |
| Flow 200 1/h | 108 | 112 | - | 109 |
| Flow 300 l/h (non-laminar) | 99 | 105 | - | 102 |

| Conditions of yeast experiment 1 (Y7) | | | | | |
|---|---|---|---|---|---|
| Flow (l/h) | Frequency (Hz) | # pulses fastest particle | # pulses average particle | Starting temp (°C) | Reynolds number |
| 100 | 20 | 2.5 | 3.7 | 30 | 884 |
| 200 | 40 | 2.5 | 3.7 | 30 | 1768 |
| 300 (non-laminar) | 60 | | 3.7 | 30 | 2653 |

The hours in the first table indicate the time until bulging of the bottles. Hence, untreated liquid already started to have significant bacterial activity within 35 hours. Samples that were treated could increase this time substantially, with the laminar flows (100 l/h and 200 l/h) having better effect than the non-laminar flow (300 1/h).

### Experiment 3b (Y9) - effect of Reynolds Number (Turbulent) (apparatus 2)

| | Sample 1 | Sample 2 | Sample 3 | Average |
|---|---|---|---|---|
| | hours | hours | hours | hours |
| Untreated | 63 | 63 | 64 | 63 |
| Flow 400 l/h (non-laminar) | 84 | 90 | 101 | 91 |
| Flow 200 l/h | 106 | 108 | 109 | 108 |

| Conditions of Experiment 2 (Y9) | | | | | |
|---|---|---|---|---|---|
| Flow (l/h) | Frequency (Hz) | # pulses fastest particle | # pulses average particle | Starting temp (°C) | Reynolds number |
| 400 (non-laminar) | 80 | | 3.7 | 30 | 3537 |
| 200 | 40 | 2.5 | 3.7 | 30 | 1768 |

Here the same effect as above is found. It also appears that the quicker flow cannot fully be compensated with the higher frequency (see also below).

The above experiments were performed with apparatus 2; the experiments summarized in the next tables were performed with apparatus 1.

### Example 4a: Experiment 1 - effect of treatment conditions on shelf life (laminar flow) (apparatus 1)

| Flow (1/h) | Frequency (Hz) | # pulses fastest particle | # pulses average particle | Starting temp (°C) | Field strength (kV/cm) | Reynol ds number | Shelf-life 14 days | Shelf-life 21 days |
|---|---|---|---|---|---|---|---|---|
| 400 | 18 | 3.1 | 4.6 | 45 | 33.3 | 648 | Yes | Yes |
| 400 | 18 | 3.1 | 4.6 | 40 | 33.3 | 648 | Yes | No |
| 400 | 18 | 3.1 | 4.6 | 35 | 33.3 | 648 | - | No |
| 500 | 18 | 2.4 | 3.7 | 45 | 33.3 | 811 | Yes | Yes |
| 500 | 18 | 2.4 | 3.7 | 40 | 33.3 | 811 | Yes | No |
| 500 | 18 | 2.4 | 3.7 | 35 | 33.3 | 811 | Yes | No |

### Example 4b: Experiment 2 - duplicate experiment of condition 500 l/h and 45 °C (apparatus 1)

| Flow (1/h) | Frequency (Hz) | # pulses fastest particle | # pulses average particle | Starting temp (°C) | Field strength (kV/cm) | Reynolds number | Shelf-life 14 days | Shelf-life 21 days |
|---|---|---|---|---|---|---|---|---|
| 500 | 18 | 2.4 | 3.7 | 45 | 33.3 | 811 | Yes | Yes |

### Example 4c: Experiment 3 - effect of higher field strength (laminar flow) (apparatus 1)

| Flow (1/h) | Frequency (Hz) | # pulses fastest particle | # pulses average particle | Starting temp (°C) | Field strength (kV/cm) | Reynolds number | Shelf-life 14 days | Shelf-life 21 days |
|---|---|---|---|---|---|---|---|---|
| 400 | 18 | 3.1 | 4.6 | 40 | 40.0 | 648 | Yes | Yes |
| 400 | 18 | 3.1 | 4.6 | 40 | 37.3 | 648 | Yes | Yes |
| 400 | 18 | 3.1 | 4.6 | 40 | 33.3 | 648 | Yes | No |
| 400 | 18 | 3.1 | 4.6 | 35 | 40.0 | 648 | Yes | No |
| 400 | 18 | 3.1 | 4.6 | 35 | 37.3 | 648 | Yes | No |

### Example 4d: Experiment 4 - duplicate experiment conditions 400 l/h and 40 °C (apparatus 1)

| Flow (1/h) | Frequency (Hz) | # pulses fastest particle | # pulses average particle | Starting temp (°C) | Field strength (kV/cm) | Reynolds number | Shelf-life 14 days | Shelf-life 21 days |
|---|---|---|---|---|---|---|---|---|
| 400 | 18 | 3.1 | 4.6 | 40 | 37.3 | 648 | Yes | Yes |

### Example 5: further microbiological data

Further microbiological data (in two additional experiments) were obtained as described above as function of the electrical field strength with other conditions constant. The total count for 33 kV/cm and 40 kV/cm is about the same up to 7 days. Then, the total count rises, with the 33 kV/cm rising orders (at least three) of magnitude stronger than the 40 kV/cm. From the above data, it appears that good results can be obtained with a temperature of at least 35 °C and an electric field of at least 35 kV/cm.

### Example 6: simulations

Further, different geometries were compared. A round treatment zone (like a tubular treatment zone) was compared with a ring-shaped treatment zone (such as especially defined herein). Both were compared with a laminar flow through the treatment zone and with a turbulent flow through the treatment zone. In a laminar flow, between two parallel plates, the fastest liquid unit is about 1.5 times faster than the mean flow speed. In turbulent flow this is in the order of at least 3-10 times. Hence, to get a same reduction in bacterial life, etc., the frequency in turbulent systems has to be in the order of at least 2-6 times the frequency of laminar systems.

From first simulation data, a treatment efficiency can be deduced as follows: treatment efficiency under the conditions chosen for these simulations and these geometries, wherein the efficiency of the laminar flow through the ring-based system (such as schematically depicted in figs. 1-3) is defines as 100%:

| | | | | |
|---|---|---|---|---|
| Type | Round | Round | Ring | Ring |
| Flow | Laminar | Turbulent | Laminar | Turbulent |
| Efficiency | 75% | 15% | 100% | 20% |

Hence, preferred are systems that allow laminar flow and conditions that facilitate laminar flow. Within those systems and conditions, the ring systems appear to perform better. Round systems are e.g. purely tubed shapes systems (without flow body) (hence, no parallel plates).

Based on the reduction in bacterial count and/or based on the taste of the treated juice with apparatus as indicated in the table above, better results in terms of reduction in bacterial count end/or taste can be obtained with apparatus that comply with the herein defined conditions than with other apparatus. Worse performing apparatus can be compensated by increasing frequency, electrical field strength, temperature of liquid when entering the treatment zone, etc. however, increasing the frequency and field strength may reduce efficiency in terms of energy efficiency, and increasing the temperature may have undesired effects on the taste and/or quality of the liquid food product. Too high electric fields may (thus) also detrimentally influence the taste and/or freshness perception of the liquid food product.

The flow patterns - the velocity and the direction of the velocity of each fluid particle - of product inside tubes may strongly depend on the Reynolds number (Re). Models can be used to calculate the residence time distribution curves of each situation, whereby in general can be discriminated between turbulent and laminar. Controlling the exact flow pattern is specific aspect of this invention. Inactivation of micro organisms is expressed by the log-reduction of a particular treatment or process. In cold-pasteurization using pulsed electric field treatments 5-log reduction is often seen as a minimal process objective. 5-log reduction means that 99.999% of the initial population of micro organisms is inactivated by the treatment. Hence not the average fluid particle but the fastest fluid particle in the treatment zone determines whether the log-reduction target is obtained (or not). In this invention, with the low-Reynolds Poiseuille flow treatment chamber it is ensured that the fastest fluid particle does have a velocity 1,5x larger than the velocity of the average fluid particle in the treatment zone. This in contrast to typically used high Reynolds PEF chamber where the velocity of the fastest fluid particle is 6x - 10x higher (see also Figs 4a-b). Classical PEF systems therefore need to use higher PEF frequencies to treat also these fast fluid particles sufficiently to obtain the target 5-log reduction. As a result the energy input may also be 3-5 times higher. The typical temperature rise of the product in the treatment chamber without cooling with this invention is roughly 5-10 °C while the typical temperature rise in a classical PEF system is 20-40 °C or even higher.

Due to this invention the residence time distribution curve can be controlled to be a laminar flow pattern and as a result a very low temperature rise of only 5-10°C is obtained. The latter may provide a true fresh tasting food product as experienced by an typical consumer. The laminar flow pattern is realized by the dimensions of the treatment zone and the dimensions of the inlet to the treatment zone.

Hence, the invention provides a method and device that can be used to reduce bacterial count with a factor 1,000 or more, even a factor 10,000, yet even more a factor of 100,000 or more while keeping the temperature of the liquid food product at a temperature of 20 °C or lower above the temperature with which it enters the treatment zone. Especially, this may allow the above mentioned use while keeping the temperature of the liquid food product at a temperature of 15 °C or lower above the temperature with which it enters a treatment zone. Especially, the temperature rise can even only be 10 °C or lower.

It will also be clear that the above description and drawings are included to illustrate some embodiments of the invention, and not to limit the scope of protection of this invention , which is defined by the claims. Starting from this disclosure, many more embodiments will be evident to a skilled person which are within the scope of protection of this invention and which are obvious combinations of prior art techniques and the disclosure of this patent.

## Claims

1. A method for treating a liquid food product, wherein said liquid food product is guided through a device (1) for applying a pulsed high voltage electric field (PEF) treatment to a fluid flow, said device (1) comprising a chamber (7) comprising an inlet (2) with an inlet cross sectional area (A1), an outlet (3), a ring-shaped treatment zone (4) arranged between the inlet and the outlet, a widening part (22) between said inlet (2) and said treatment zone (4), a flow body (8) in said chamber (7) providing in said chamber (7) the ring-shaped treatment zone (4), and at least a first electrode (V1) and a second electrode (V2) positioned for providing an axial electric field in said treatment zone (4), wherein the ring-shaped treatment zone (4) is defined by the inner surface of the chamber (7) and the outer surface of the flow body (8), wherein said flow body (8) at its upstream end is provided with a tip (12), wherein said chamber (7) has a ring-shaped region (20) upstream of, and connecting to, said treatment zone (4), wherein said upstream ring-shaped region (20) has an axial length (L1) of at least five times a treatment zone height (H), wherein said upstream ring-shaped region (20) has a cross sectional area (A3 minus A4) between 0.9 and 2.0 times the cross sectional area of said treatment zone (4), and wherein said treatment zone (4) is circle-ring shaped, wherein said chamber (7) comprises said widening part (22) between said inlet (2) and said upstream ring-shaped region (20), wherein said widening part (22) gradually widens in cross sectional area from said inlet (2) in a downstream direction, wherein said cross sectional area of said inlet (2) in a downstream direction gradually flares out until the cross sectional area is at least 5 times larger with respect to said inlet cross sectional area (A1), and wherein further downstream said chamber (7) comprises said flow body (8) configured to continue said cross section into a ring-shape with a smooth and gradual reduction of the cross sectional area in further downstream direction with at least 1.5 times and up to the ring-shaped treatment zone (4), wherein said chamber (7) has further a downstream ring-shaped region (21) downstream of, and connecting to, said treatment zone (4), wherein said downstream ring-shaped region (21) has an axial length (L2) of at least two times the treatment zone height (H), wherein the length (L) of the treatment zone (4) is between 2 and 5 times the height (H) of the treatment zone (4), wherein the cross sectional area of said treatment zone (4) is at least 1.5 times the cross sectional area (A1) of said inlet (2), wherein said downstream ring-shaped region has a cross sectional area between 0.9 and 2.0 times the cross sectional area of said treatment zone (4), wherein said cross sectional area of said ring-shaped region (20) upstream of said treatment zone (4) is substantially constant over an axial length of at least 5 times the height (H) of the treatment zone (4), and wherein said cross sectional area of said downstream ring-shaped region (21) downstream of treatment zone (4) is substantially constant over an axial length of at least 2 times the height (H) of the treatment zone (4), wherein said first electrode (V1) is positioned upstream of said treatment zone (4) and said second electrode (V2) is positioned downstream of said treatment zone (4) for providing said axial, pulsed electric field with field lines substantially parallel to a flow direction (F) of fluid in said treatment zone (4) when said device (1) is in operation, the method further comprising providing the liquid food product in a laminar flow in the ring-shaped treatment zone (4), and applying a pulsed electric field between said first electrode and second electrode, wherein a potential difference is applied to said electrodes to result in an electrical field of 20-60 kV/cm in said treatment zone (4), and wherein a potential difference is applied to said electrodes with a pulse frequency of less than 100 Hz, and with a pulse width of 1-5 microseconds.

2. The method according to claim 1, further comprising providing said liquid food product with a temperature selected from the range of 35-55 °C to said treatment zone (4).

3. The method according to any one of the preceding claims, wherein a pulse frequency of the electric field is set with respect to a flow speed of the fluid, such that the fastest fluid fraction receives between 1 and 8 pulses.

4. The method according to any one of the preceding claims, wherein the axial length (L1) of the upstream ring-shaped region (20) is at least ten times the treatment zone height (H), wherein the axial length (L2) of said downstream ring-shaped region (21) is at least five times the treatment zone height (H).

5. The method according to any one of the preceding claims, wherein a ratio of said cross sectional area of said treatment zone to the cross sectional area (A1) of said inlet (2) is selected to reduce a flow speed of incoming fluid to a laminar flow speed region in an operational flow speed region of said device, more in particular said cross sectional area of said treatment zone (4) is at least three times the cross sectional area (A1) of said inlet (2).

6. The method according to any one of the preceding claims, wherein said widening part (22) comprises a cone-shaped widening part, wherein said widening part gradually widens in cross sectional area from said inlet in downstream direction, wherein the cross sectional area widens up to between 1.5 and 10 times the cross sectional area of the inlet (A1), in particular between 2 and 10 times the cross sectional area of the inlet (A1).

7. The method according to any one of the preceding claims, wherein said first electrode comprises a pair of concentric electrodes and said second electrode comprises a pair of concentric electrodes.

8. A device (1) for applying a pulsed high voltage electric field (PEF) treatment to a fluid flow of a liquid food product, said device (1) comprising a chamber (7) comprising an inlet (2) with an inlet cross sectional area (A1), an outlet (3), a ring-shaped treatment zone (4) arranged between the inlet and the outlet, a widening part (22) between said inlet (2) and said treatment zone (4), a flow body (8) in said chamber (7) providing in said chamber (7) the ring-shaped treatment zone (4), and at least a first electrode (V1) and a second electrode (V2) positioned for providing an axial electric field in said treatment zone (4), wherein the ring-shaped treatment zone (4) is defined by the inner surface of the chamber (7) and the outer surface of the flow body (8), wherein said flow body (8) at its upstream end is provided with a tip (12), wherein said chamber (7) has a ring-shaped region (20) upstream of, and connecting to, said treatment zone (4), wherein said upstream ring-shaped region (20) has an axial length (L1) of at least five times a treatment zone height (H), wherein said upstream ring-shaped region (20) has a cross sectional area (A3 minus A4) between 0.9 and 2.0 times the cross sectional area of said treatment zone (4), and wherein said treatment zone (4) is circle-ring shaped, wherein said chamber (7) comprises said widening part (22) between said inlet (2) and said upstream ring-shaped region (20), wherein said widening part (22) gradually widens in cross sectional area from said inlet (2) in a downstream direction, wherein said cross sectional area of said inlet (2) in a downstream direction gradually flares out until the cross sectional area is at least 5 times larger with respect to said inlet cross sectional area (A1), and wherein further downstream said chamber (7) comprises said flow body (8) configured to continue said cross section into a ring-shape with a smooth and gradual reduction of the cross sectional area in further downstream direction with at least 1.5 times and up to the ring-shaped treatment zone (4), wherein said chamber (7) has further a downstream ring-shaped region (21) downstream of, and connecting to, said treatment zone (4), wherein said downstream ring-shaped region (21) has an axial length (L2) of at least two times the treatment zone height (H), wherein the length (L) of the treatment zone (4) is between 2 and 5 times the height (H) of the treatment zone (4), wherein the cross sectional area of said treatment zone (4) is at least 1.5 times the cross sectional area (A1) of said inlet (2), wherein said downstream ring-shaped region (21) has a cross sectional area between 0.9 and 2.0 times the cross sectional area of said treatment zone (4), wherein said cross sectional area of said ring-shaped region (20) upstream of said treatment zone (4) is substantially constant over an axial length of at least 5 times the height (H) of the treatment zone (4), wherein said cross sectional area of said downstream ring-shaped region (21) downstream of treatment zone (4) is substantially constant over an axial length of at least 2 times the height (H) of the treatment zone (4), and wherein a ratio of said cross sectional area of said treatment zone to the cross sectional area (A1) of said inlet (2) is selected to reduce a flow speed of incoming fluid to a laminar flow speed region in an operational flow speed region of said device, wherein said first electrode (V1) is positioned upstream of said treatment zone (4) and said second electrode (V2) is positioned downstream of said treatment zone (4) for providing said axial, pulsed electric field with field lines substantially parallel to a flow direction (F) of fluid in said treatment zone (4) when said device (1) is in operation.

9. The device (1) according to claim 8, wherein the axial length (L1) of the upstream ring-shaped region (20) is at least ten times the treatment zone height (H) and the axial length (L2) of said downstream ring-shaped region (21) is at least five times the treatment zone height (H).

10. The device according to any one of claims 8-9, wherein said cross sectional area of said treatment zone (4) is at least three times the cross sectional area (A1) of said inlet (2).

11. The device according to any one of claims 8-10, wherein said widening part (22) comprises a cone-shaped widening part, wherein said widening part gradually widens in cross sectional area from said inlet in downstream direction, wherein the cross sectional area widens up to between 1.5 and 10 times the cross sectional area of the inlet (A1), in particular between 2 and 10 times the cross sectional area of the inlet (A1).

12. The device according to any one of claims 8-11, further comprising a fluid displacement unit (23), arranged for displacing a fluid through said chamber (7) and provided with a setting to provide a rate of flow with a laminar flow at said treatment zone (4).

13. The device according to any one of claims 8-12, wherein said first electrode (V1) comprises a pair of concentric electrodes and said second electrode (V2) comprises a pair of concentric electrodes.

14. The device of any one of claims 8-13, comprising at least one replaceable electrode part (5, 5') upstream of said treatment zone (4), and a second replaceable electrode part (6, 6') downstream of said treatment zone (4).

15. Use of the method according to any one of claims 1-7 or the device according to any one of claims 8-14 for pasteurizing or sterilizing a liquid food product.

16. Use according to claim 15, for lowering the bacterial count (CFU/ml) by a factor 1000 or higher in said liquid food product, wherein the liquid food product comprises a fruit juice or fruit nectar.

## Patentansprüche

1. Verfahren zum Behandeln eines flüssigen Lebensmittelprodukts, wobei das flüssige Lebensmittelprodukt durch eine Vorrichtung (1) zum Anlegen einer gepulsten Hochspannungs-Elektrofeld-(PEF)-Behandlung an einen Flüssigkeitsstrom geführt wird, wobei die Vorrichtung (1) eine Kammer (7) umfassend einen Einlass (2) mit einem Einlassquerschnitt (A1), einen Auslass (3), eine zwischen dem Einlass und dem Auslass angeordnete ringförmige Behandlungszone (4), einen Verbreiterungsteil (22) zwischen dem Einlass (2) und der Behandlungszone (4), einen Strömungskörper (8) in der Kammer (7), der in der Kammer (7) die ringförmige Behandlungszone (4) bereitstellt, und zumindest eine erste Elektrode (V1) und eine zweite Elektrode (V2), die zum Bereitstellen eines axialen elektrischen Feldes in der Behandlungszone (4) positioniert sind, wobei die ringförmige Behandlungszone (4) durch die Innenfläche der Kammer (7) und die Außenfläche des Strömungskörpers (8) definiert ist, wobei der Strömungskörper (8) an seinem stromaufwärtigen Ende mit einer Spitze (12) bereitgestellt ist, wobei die Kammer (7) einen ringförmigen Bereich (20) stromaufwärts von und verbunden mit der der Behandlungszone (4) aufweist, wobei der stromaufwärtige ringförmige Bereich (20) eine axiale Länge (L1) von mindestens dem Fünffachen einer Behandlungszonenhöhe (H) aufweist, wobei der stromaufwärtige ringförmige Bereich (20) eine Querschnittsfläche (A3 minus A4) zwischen dem 0,9- und dem 2,0-fachen der Querschnittsfläche der Behandlungszone (4) aufweist, und wobei die Behandlungszone (4) kreisringförmig ist, wobei die Kammer (7) den Verbreiterungsteil (22) zwischen dem Einlass (2) und dem stromaufwärtigen ringförmigen Bereich (20) umfasst, wobei sich der Verbreiterungsteil (22) allmählich im Querschnittsbereich vom Einlass (2) in einer stromabwärtigen Richtung verbreitert, wobei sich der Querschnittsbereich des Einlasses (2) in einer stromabwärtigen Richtung allmählich aufweitet, bis der Querschnittsbereich in Bezug auf den Einlassquerschnittsbereich (A1) um mindestens das 5-fache größer ist, und wobei weiter stromabwärts die Kammer (7) den Strömungskörper (8) umfasst, der konfiguriert ist, um den Querschnitt in eine ringförmige Form mit einer glatten und allmählichen Verringerung der Querschnittsfläche in weiterer stromabwärtiger Richtung mit mindestens dem 1,5-fachen und bis zur ringförmigen Behandlungszone (4) fortzusetzen, wobei die Kammer (7) weiter einen stromabwärtigen und mit dieser verbundenen ringförmigen Bereich (21) stromabwärts von der Behandlungszone (4) aufweist, wobei der stromabwärtige ringförmige Bereich (21) eine axiale Länge (L2) von mindestens dem Doppelten der Behandlungszonenhöhe (H) aufweist, wobei die Länge (L) der Behandlungszone (4) zwischen dem 2- und 5-fachen der Höhe (H) der Behandlungszone (4) liegt, wobei die Querschnittsfläche der Behandlungszone (4) mindestens das 1,5-fache der Querschnittsfläche (A1) des Einlasses (2) aufweist, wobei der stromabwärtige ringförmige Bereich eine Querschnittsfläche zwischen dem 0,9- und dem 2,0-fachen der Querschnittsfläche der Behandlungszone (4) aufweist, wobei die Querschnittsfläche des ringförmigen Bereichs (20) stromaufwärts von der Behandlungszone (4) über eine axiale Länge von mindestens der 5-fachen Höhe (H) der Behandlungszone (4) im Wesentlichen konstant ist, und wobei die Querschnittsfläche des stromabwärtigen ringförmigen Bereichs (21) stromabwärts von der Behandlungszone (4) über eine axiale Länge von mindestens dem Doppelten der Höhe (H) der Behandlungszone (4) im Wesentlichen konstant ist, wobei die erste Elektrode (V1) stromaufwärts von der Behandlungszone (4) und die zweite Elektrode (V2) stromabwärts von der Behandlungszone (4) zum Bereitstellen des axialen, gepulsten elektrischen Feldes mit Feldlinien positioniert ist, die im Wesentlichen parallel zu einer Strömungsrichtung (F) der Flüssigkeit in der Behandlungszone (4) verlaufen, wenn die Vorrichtung (1) in Betrieb ist, wobei das Verfahren weiter das Bereitstellen des flüssigen Lebensmittelprodukts in einer laminaren Strömung in der ringförmigen Behandlungszone (4) und das Anlegen eines gepulsten elektrischen Feldes zwischen der ersten Elektrode und der zweiten Elektrode umfasst, wobei eine Potentialdifferenz an die Elektroden angelegt wird, um ein elektrisches Feld von 20-60 kV/cm in der Behandlungszone (4) zu erzeugen, und wobei eine Potentialdifferenz an die Elektroden mit einer Impulsfrequenz von weniger als 100 Hz und mit einer Impulsbreite von 1-5 Mikrosekunden angelegt wird.

2. Verfahren nach Anspruch 1, weiter umfassend das Bereitstellen des flüssigen Lebensmittelprodukts mit einer Temperatur, die aus dem Bereich von 35-55 °C bis zur Behandlungszone (4) ausgewählt ist.

3. Verfahren nach einem der vorstehenden Ansprüche, wobei eine Impulsfrequenz des elektrischen Feldes in Bezug auf eine Strömungsgeschwindigkeit der Flüssigkeit eingestellt wird, so dass die schnellste flüssige Fraktion zwischen 1 und 8 Impulsen erhält.

4. Verfahren nach einem der vorstehenden Ansprüche, wobei die axiale Länge (L1) des stromaufwärtigen ringförmigen Bereichs (20) mindestens das Zehnfache der Behandlungszonenhöhe (H) beträgt, wobei die axiale Länge (L2) des stromabwärtigen ringförmigen Bereichs (21) mindestens das Fünffache der Behandlungszonenhöhe (H) beträgt.

5. Verfahren nach einem der vorstehenden Ansprüche, wobei ein Verhältnis der Querschnittsfläche der Behandlungszone zu der Querschnittsfläche (A1) des Einlasses (2) ausgewählt wird, um eine Strömungsgeschwindigkeit der einströmenden Flüssigkeit auf einen laminaren Strömungsgeschwindigkeitsbereich in einem Betriebsströmungsgeschwindigkeitsbereich der Vorrichtung zu reduzieren, wobei insbesondere die Querschnittsfläche der Behandlungszone (4) mindestens das Dreifache der Querschnittsfläche (A1) des Einlasses (2) beträgt.

6. Verfahren nach einem der vorstehenden Ansprüche, wobei der Verbreiterungsteil (22) einen kegelförmigen Verbreiterungsteil umfasst, wobei sich der Verbreiterungsteil allmählich im Querschnittsbereich vom Einlass in stromabwärtiger Richtung verbreitert, wobei sich der Querschnittsbereich auf das 1,5- bis 10-fache der Querschnittsfläche des Einlasses (A1), insbesondere auf das 2- bis 10-fache der Querschnittsfläche des Einlasses (A1), verbreitert.

7. Verfahren nach einem der vorstehenden Ansprüche, wobei die erste Elektrode ein Paar konzentrischer Elektroden und die zweite Elektrode ein Paar konzentrischer Elektroden umfasst.

8. Vorrichtung (1) zum Anlegen einer gepulsten Hochspannungs-Elektrofeld (PEF)-Behandlung an einen Fluidstrom eines flüssigen Lebensmittelprodukts, wobei die Vorrichtung (1) eine Kammer (7) umfassend einen Einlass (2) mit einem Einlassquerschnitt (A1), einen Auslass (3), eine zwischen dem Einlass und dem Auslass angeordnete ringförmige Behandlungszone (4), einen Verbreiterungsteil (22) zwischen dem Einlass (2) und der Behandlungszone (4), einen Strömungskörper (8) in der Kammer (7), der in der Kammer (7) die ringförmige Behandlungszone (4) bereitstellt, und mindestens eine erste Elektrode (V1) und eine zweite Elektrode (V2), die zum Bereitstellen eines axialen elektrischen Feldes in der Behandlungszone (4) positioniert sind, wobei die ringförmige Behandlungszone (4) durch die Innenfläche der Kammer (7) und die Außenfläche des Strömungskörpers (8) definiert ist, wobei der Strömungskörper (8) an seinem stromaufwärtigen Ende mit einer Spitze (12) versehen ist, wobei die Kammer (7) einen ringförmigen Bereich (20) stromaufwärts von und verbunden mit der Behandlungszone (4) aufweist, wobei der stromaufwärtige ringförmige Bereich (20) eine axiale Länge (L1) von mindestens dem Fünffachen einer Behandlungszonenhöhe (H) aufweist, wobei der stromaufwärtige ringförmige Bereich (20) eine Querschnittsfläche (A3 minus A4) zwischen dem 0,9- und dem 2,0-fachen der Querschnittsfläche der Behandlungszone (4) aufweist, und wobei die Behandlungszone (4) kreisringförmig ist, wobei die Kammer (7) den Verbreiterungsteil (22) zwischen dem Einlass (2) und dem stromaufwärtigen ringförmigen Bereich (20) umfasst, wobei sich der Verbreiterungsteil (22) allmählich im Querschnittsbereich vom Einlass (2) in einer stromabwärtigen Richtung verbreitert, wobei sich der Querschnittsbereich des Einlasses (2) in einer stromabwärtigen Richtung allmählich aufweitet, bis der Querschnittsbereich in Bezug auf den Einlassquerschnittsbereich (A1) um mindestens das 5-fache größer ist, und wobei weiter stromabwärts die Kammer (7) den Strömungskörper (8) umfasst, der konfiguriert ist, um den Querschnitt in eine ringförmige Form mit einer glatten und allmählichen Verringerung der Querschnittsfläche in weiterer stromabwärtiger Richtung mit mindestens dem 1,5-fachen und bis zur ringförmigen Behandlungszone (4) fortzusetzen, wobei die Kammer (7) weiter einen stromabwärtigen und mit dieser verbundenen ringförmigen Bereich (21) stromabwärts von der Behandlungszone (4) aufweist, wobei der stromabwärtige ringförmige Bereich (21) eine axiale Länge (L2) von mindestens dem Zweifachen der Behandlungszonenhöhe (H) aufweist, wobei die Länge (L) der Behandlungszone (4) zwischen dem Zwei- und Fünffachen der Höhe (H) der Behandlungszone (4) liegt, wobei die Querschnittsfläche der Behandlungszone (4) mindestens das 1,5-fache der Querschnittsfläche (A1) des Einlasses (2) aufweist, wobei der stromabwärtige ringförmige Bereich (21) eine Querschnittsfläche zwischen dem 0,9- und dem 2-fachen der Querschnittsfläche der Behandlungszone (4) aufweist, wobei die Querschnittsfläche des ringförmigen Bereichs (20) stromaufwärts von der Behandlungszone (4) über eine axiale Länge von mindestens dem Fünffachen der Höhe (H) der Behandlungszone (4) im Wesentlichen konstant ist, wobei die Querschnittsfläche des stromabwärtigen ringförmigen Bereichs (21) stromabwärts von der Behandlungszone (4) über eine axiale Länge von mindestens dem Doppelten der Höhe (H) der Behandlungszone (4) im Wesentlichen konstant ist, und wobei ein Verhältnis der Querschnittsfläche der Behandlungszone zu der Querschnittsfläche (A1) des Einlasses (2) ausgewählt ist, um eine Strömungsgeschwindigkeit der einströmenden Flüssigkeit auf einen laminaren Strömungsgeschwindigkeitsbereich in einem Betriebsströmungsgeschwindigkeitsbereich der Vorrichtung zu reduzieren, wobei die erste Elektrode (V1) stromaufwärts von der Behandlungszone (4) und die zweite Elektrode (V2) stromabwärts von der Behandlungszone (4) positioniert ist, um das axiale, gepulste elektrische Feld mit Feldlinien im Wesentlichen parallel zu einer Strömungsrichtung (F) der Flüssigkeit in der Behandlungszone (4) zu versorgen, wenn die Vorrichtung (1) in Betrieb ist.

9. Vorrichtung (1) nach Anspruch 8, wobei die axiale Länge (L1) des stromaufwärtigen ringförmigen Bereichs (20) mindestens das Zehnfache der Behandlungszonenhöhe (H) und die axiale Länge (L2) des stromabwärts liegenden ringförmigen Bereichs (21) mindestens das Fünffache der Behandlungszonenhöhe (H) beträgt.

10. Vorrichtung nach einem der Ansprüche 8-9, wobei die Querschnittsfläche der Behandlungszone (4) mindestens das Dreifache der Querschnittsfläche (A1) des Einlasses (2) beträgt.

11. Vorrichtung nach einem der Ansprüche 8-10, wobei der Verbreiterungsteil (22) einen kegelförmigen Verbreiterungsteil umfasst, wobei sich der Verbreiterungsteil allmählich im Querschnittsbereich vom Einlass in stromabwärtiger Richtung verbreitert, wobei sich der Querschnittsbereich auf das 1,5- bis 10-fache der Querschnittsfläche des Einlasses (A1), insbesondere auf das 2- bis 10-fache der Querschnittsfläche des Einlasses (A1), verbreitert.

12. Vorrichtung nach einem der Ansprüche 8-11, weiter umfassend eine Flüssigkeitsverdrängungseinheit (23), die zum Verdrängen einer Flüssigkeit durch die Kammer (7) angeordnet und mit einer Einstellung versehen ist, um eine Strömungsgeschwindigkeit mit einer laminaren Strömung in der Behandlungszone (4) bereitzustellen.

13. Vorrichtung nach einem der Ansprüche 8-12, wobei die erste Elektrode (V1) ein Paar konzentrische Elektroden und die zweite Elektrode (V2) ein Paar konzentrische Elektroden umfasst.

14. Vorrichtung nach einem der Ansprüche 8-13, umfassend mindestens einen austauschbaren Elektrodenteil (5, 5') stromaufwärts von der Behandlungszone (4) und einen zweiten austauschbaren Elektrodenteil (6, 6') stromabwärts von der Behandlungszone (4).

15. Verwendung des Verfahrens nach einem der Ansprüche 1-7 oder der Vorrichtung nach einem der Ansprüche 8-14 zum Pasteurisieren oder Sterilisieren eines flüssigen Lebensmittelprodukts.

16. Verwendung nach Anspruch 15 zum Senken der Keimzahl (CFU/ml) um einen Faktor 1000 oder höher in dem flüssigen Nahrungsmittelprodukt, wobei das flüssige Nahrungsmittelprodukt einen Fruchtsaft oder Fruchtnektar umfasst.

## Revendications

1. Procédé pour traiter un produit alimentaire liquide, dans lequel ledit produit alimentaire liquide est guidé à travers un dispositif (1) pour appliquer un traitement par champ électrique haute tension pulsé (PEF) à un écoulement de fluide, ledit dispositif (1) comprenant une chambre (7) comprenant une entrée (2) ayant une section transversale d'entrée (A1), une sortie (3), une zone de traitement en forme d'anneau (4) agencée entre l'entrée et la sortie, une partie d'élargissement (22) entre ladite entrée (2) et ladite zone de traitement (4), un corps d'écoulement (8) dans ladite chambre (7) fournissant dans ladite chambre (7) la zone de traitement en forme d'anneau (4), et au moins une première électrode (V1) et une deuxième électrode (V2) positionnées pour fournir un champ électrique axial dans ladite zone de traitement (4), dans lequel la zone de traitement en forme d'anneau (4) est définie par la surface interne de la chambre (7) et la surface externe du corps d'écoulement (8), dans lequel ledit corps d'écoulement (8) au niveau de son extrémité amont est pourvu d'une pointe (12), dans lequel ladite chambre (7) comporte une région en forme d'anneau (20) en amont de, et se connectant à, ladite zone de traitement (4), dans lequel ladite région amont en forme d'anneau (20) présente une longueur axiale (L1) égale à au moins cinq fois une hauteur (H) de zone de traitement, dans lequel ladite région amont en forme d'anneau (20) présente une section transversale (A3 moins A4) entre 0,9 et 2,0 fois la section transversale de ladite zone de traitement (4), et dans lequel ladite zone de traitement (4) est en forme d'anneau circulaire, dans lequel ladite chambre (7) comprend ladite partie d'élargissement (22) entre ladite entrée (2) et ladite région amont en forme d'anneau (20), dans lequel la section transversale de ladite partie d'élargissement (22) s'élargit progressivement à partir de ladite entrée (2) dans une direction aval, dans lequel ladite section transversale de ladite entrée (2) dans une direction aval s'évase progressivement jusqu'à ce que la section transversale soit au moins 5 fois plus grande que ladite section transversale d'entrée (A1), et dans lequel davantage en aval ladite chambre (7) comprend ledit corps d'écoulement (8) configuré pour continuer ladite section transversale en une forme d'anneau avec une réduction douce et progressive de la section transversale dans une direction davantage en aval avec au moins 1,5 fois et jusqu'à la zone de traitement en forme d'anneau (4), dans lequel ladite chambre (7) comporte en outre une région aval en forme d'anneau (21) en aval de, et se connectant à, ladite zone de traitement (4), dans lequel ladite région aval en forme d'anneau (21) présente une longueur axiale (L2) égale à au moins deux fois la hauteur (H) de zone de traitement, dans lequel la longueur (L) de la zone de traitement (4) est entre 2 et 5 fois la hauteur (H) de la zone de traitement (4), dans lequel la section transversale de ladite zone de traitement (4) est égale à au moins 1,5 fois la section transversale (A1) de ladite entrée (2), dans lequel ladite région aval en forme d'anneau présente une section transversale entre 0,9 et 2,0 fois la section transversale de ladite zone de traitement (4), dans lequel ladite section transversale de ladite région en forme d'anneau (20) en amont de ladite zone de traitement (4) est sensiblement constante sur une longueur axiale d'au moins 5 fois la longueur (H) de la zone de traitement (4), et dans lequel ladite section transversale de ladite région aval en forme d'anneau (21) en aval de la zone de traitement (4) est sensiblement constante sur une longueur axiale d'au moins 2 fois la hauteur (H) de la zone de traitement (4), dans lequel ladite première électrode (V1) est positionnée en amont de ladite zone de traitement (4) et ladite deuxième électrode (V2) est positionnée en aval de ladite zone de traitement (4) pour fournir ledit champ électrique pulsé axial avec des lignes de champ sensiblement parallèles à la direction d'écoulement (F) d'un fluide dans ladite zone de traitement (4) quand ledit dispositif (1) est en fonctionnement, le procédé comprenant en outre la fourniture du produit alimentaire liquide dans un écoulement laminaire dans la zone de traitement en forme d'anneau (4), et l'application d'un champ électrique pulsé entre ladite première électrode et ladite seconde électrode, dans lequel une différence de potentiel est appliquée auxdites électrodes pour donner un champ électrique de 20-60 kV/cm dans ladite zone de traitement (4), et dans lequel une différence de potentiel est appliquée auxdites électrodes avec une fréquence d'impulsion de moins de 100 Hz, et avec une largeur d'impulsion de 1-5 microsecondes.

2. Procédé selon la revendication 1, comprenant en outre la fourniture dudit produit alimentaire liquide avec une température sélectionnée dans la plage allant de 35-55 °C à ladite zone de traitement (4).

3. Procédé selon l'une quelconque des revendications précédentes, dans lequel une fréquence d'impulsion du champ électrique est réglée par rapport à une vitesse d'écoulement du fluide, de façon que la fraction de fluide la plus rapide reçoive entre 1 et 8 impulsions.

4. Procédé selon l'une quelconque des revendications précédentes, dans lequel la longueur axiale (L1) de la région amont en forme d'anneau (20) est égale à au moins dix fois la hauteur (H) de zone de traitement, dans lequel la longueur axiale (L2) de ladite région aval en forme d'anneau (21) est égale à au moins cinq fois la hauteur (H) de zone de traitement.

5. Procédé selon l'une quelconque des revendications précédentes, dans lequel un rapport entre ladite section transversale de ladite zone de traitement et la section transversale (A1) de ladite entrée (2) est sélectionné pour réduire une vitesse d'écoulement d'un fluide entrant dans une région de vitesse d'écoulement laminaire dans une région de vitesse d'écoulement opérationnelle dudit dispositif, plus particulièrement ladite section transversale de ladite zone de traitement (4) est égale à au moins trois fois la section transversale (A1) de ladite entrée (2).

6. Procédé selon l'une quelconque des revendications précédentes, dans lequel ladite partie d'élargissement (22) comprend une partie d'élargissement en forme de cône, dans lequel la section transversale de ladite partie d'élargissement s'élargit progressivement à partir de ladite entrée dans une direction aval, dans lequel la section transversale s'élargit jusqu'à être égale à 1,5 à 10 fois la section transversale de l'entrée (A1), en particulier entre 2 et 10 fois la section transversale de l'entrée (A1).

7. Procédé selon l'une quelconque des revendications précédentes, dans lequel ladite première électrode comprend une paire d'électrodes concentriques et ladite deuxième électrode comprend une paire d'électrodes concentriques.

8. Dispositif (1) pour appliquer un traitement par champ électrique haute tension pulsé (PEF) à un écoulement de fluide d'un produit alimentaire liquide, ledit dispositif (1) comprenant une chambre (7) comprenant une entrée (2) ayant une section transversale d'entrée (A1), une sortie (3), une zone de traitement en forme d'anneau (4) agencée entre l'entrée et la sortie, une partie d'élargissement (22) entre ladite entrée (2) et ladite zone de traitement (4), un corps d'écoulement (8) dans ladite chambre (7) fournissant dans ladite chambre (7) la zone de traitement en forme d'anneau (4), et au moins une première électrode (V1) et une deuxième électrode (V2) positionnées pour fournir un champ électrique axial dans ladite zone de traitement (4), dans lequel la zone de traitement en forme d'anneau (4) est définie par la surface interne de la chambre (7) et la surface externe du corps d'écoulement (8), dans lequel ledit corps d'écoulement (8) au niveau de son extrémité amont est pourvu d'une pointe (12), dans lequel ladite chambre (7) comporte une région en forme d'anneau (20) en amont de, et se connectant à, ladite zone de traitement (4), dans lequel ladite région amont en forme d'anneau (20) présente une longueur axiale (L1) égale à au moins cinq fois une hauteur (H) de zone de traitement, dans lequel ladite région amont en forme d'anneau (20) présente une section transversale (A3 moins A4) entre 0,9 et 2,0 fois la section transversale de ladite zone de traitement (4), et dans lequel ladite zone de traitement (4) est en forme d'anneau circulaire, dans lequel ladite chambre (7) comprend ladite partie d'élargissement (22) entre ladite entrée (2) et ladite région amont en forme d'anneau (20), dans lequel la section transversale de ladite partie d'élargissement (22) s'élargit progressivement à partir de ladite entrée (2) dans une direction aval, dans lequel ladite section transversale de ladite entrée (2) dans une direction aval s'évase progressivement jusqu'à ce que la section transversale soit au moins 5 fois plus grande que ladite section transversale d'entrée (A1), et dans lequel davantage en aval ladite chambre (7) comprend ledit corps d'écoulement (8) configuré pour continuer ladite section transversale en une forme d'anneau avec une réduction douce et progressive de la section transversale dans une direction davantage en aval avec au moins 1,5 fois et jusqu'à la zone de traitement en forme d'anneau (4), dans lequel ladite chambre (7) comporte en outre une région aval en forme d'anneau (21) en aval de, et se connectant à, ladite zone de traitement (4), dans lequel ladite région aval en forme d'anneau (21) présente une longueur axiale (L2) égale à au moins deux fois la hauteur (H) de zone de traitement, dans lequel la longueur (L) de la zone de traitement (4) est entre 2 et 5 fois la hauteur (H) de la zone de traitement (4), dans lequel la section transversale de ladite zone de traitement (4) est égale à au moins 1,5 fois la section transversale (A1) de ladite entrée (2), dans lequel ladite région aval en forme d'anneau (21) présente une section transversale entre 0,9 et 2,0 fois la section transversale de ladite zone de traitement (4), dans lequel ladite section transversale de ladite région en forme d'anneau (20) en amont de ladite zone de traitement (4) est sensiblement constante sur une longueur axiale d'au moins 5 fois la longueur (H) de la zone de traitement (4), dans lequel ladite section transversale de ladite région aval en forme d'anneau (21) en aval de la zone de traitement (4) est sensiblement constante sur une longueur axiale d'au moins 2 fois la hauteur (H) de la zone de traitement (4), et dans lequel un rapport entre ladite section transversale de ladite zone de traitement et la section transversale (A1) de ladite entrée (2) est sélectionné pour réduire une vitesse d'écoulement d'un fluide entrant dans une région de vitesse d'écoulement laminaire dans une région de vitesse d'écoulement opérationnelle dudit dispositif, dans lequel ladite première électrode (V1) est positionnée en amont de ladite zone de traitement (4) et ladite deuxième électrode (V2) est positionnée en aval de ladite zone de traitement (4) pour fournir ledit champ électrique pulsé axial avec des lignes de champ sensiblement parallèles à la direction d'écoulement (F) d'un fluide dans ladite zone de traitement (4) quand ledit dispositif (1) est en fonctionnement.

9. Dispositif (1) selon la revendication 8, dans lequel la longueur axiale (L1) de la région amont en forme d'anneau (20) est égale à au moins dix fois la hauteur (H) de zone de traitement et la longueur axiale (L2) de ladite région aval en forme d'anneau (21) est égale à au moins cinq fois la hauteur (H) de zone de traitement.

10. Dispositif selon l'une quelconque des revendications 8-9, dans lequel ladite section transversale de ladite zone de traitement (4) est égale à au moins trois fois la section transversale (A1) de ladite entrée (2).

11. Dispositif selon l'une quelconque des revendications 8-10, dans lequel ladite partie d'élargissement (22) comprend une partie d'élargissement en forme de cône, dans lequel la section transversale de ladite partie d'élargissement s'élargit progressivement à partir de ladite entrée dans une direction aval, dans lequel ladite section transversale s'élargit jusqu'à être égale à 1,5 à 10 fois la section transversale de l'entrée (A1), en particulier entre 2 et 10 fois la section transversale de l'entrée (A1).

12. Dispositif selon l'une quelconque des revendications 8 à 11, comprenant en outre une unité de déplacement de fluide (23), agencée pour déplacer un fluide à travers ladite chambre (7) et pourvue d'un réglage pour fournir un débit ayant un écoulement laminaire au niveau de ladite zone de traitement (4).

13. Dispositif selon l'une quelconque des revendications 8-12, dans lequel ladite première électrode (V1) comprend une paire d'électrodes concentriques et ladite deuxième électrode (V2) comprend une paire d'électrodes concentriques.

14. Dispositif selon l'une quelconque des revendications 8-13, comprenant au moins une partie d'électrode remplaçable (5, 5') en amont de ladite zone de traitement (4), et une seconde partie d'électrode remplaçable (6, 6') en aval de ladite zone de traitement (4).

15. Utilisation du procédé selon l'une quelconque des revendications 1-7 ou du dispositif selon l'une quelconque des revendications 8-14 pour pasteuriser ou stériliser un produit alimentaire liquide.

16. Utilisation selon la revendication 15, pour abaisser le nombre de bactéries (UFC/ml) d'un facteur 1000 ou plus dans ledit produit alimentaire liquide, dans laquelle le produit alimentaire liquide comprend un jus de fruits ou un nectar de fruit.
